# FASCICULE DE BREVET EUROPEEN

(11) **EP 4 065 354 B1**
(45) Date de publication et mention de la délivrance du brevet: **09.10.2024**
(21) Numéro de dépôt: 20820514.6
(22) Date de dépôt: 25.11.2020
(51) Int. Cl.: B29C 70/88, B29C 70/48, B29C 70/68, B29C 65/50, B29C 65/00, B29D 99/00, B29L 31/08, F01D 5/00, F01D 5/14, F01D 5/28

(54) **PROCEDE DE FABRICATION D'UNE AUBE COMPOSITE POUR UN MOTEUR D'AERONEF**
VERFAHREN ZUR HERSTELLUNG EINER VERBUNDSCHAUFEL FÜR EINEN FLUGZEUGMOTOR
PROCESS FOR MANUFACTURING A COMPOSITE BLADE FOR AN AIRCRAFT ENGINE

(30) Priorité: 29.11.2019 FR 1913467
(43) Date de publication de la demande: 05.10.2022
(73) Titulaire: SAFRAN, 75015 Paris (FR)
(72) Inventeur: TOUZE, Adrien, 77550 MOISSY-CRAMAYEL (FR); COULAUD, Magali Mélanie, 77550 MOISSY-CRAMAYEL (FR); LANFANT, Nicolas Pierre, 77550 MOISSY-CRAMAYEL (FR); STACKLER, Matthieu, 77550 MOISSY-CRAMAYEL (FR)
(74) Mandataire: Gevers & Orès
(86) Numéro de dépôt international: PCT/FR2020/052170
(87) Numéro de publication internationale: WO 2021/105612

(56) Documents cités:
- US-A1- 2011 194 941
- US-B2- 9 555 566
- ZHU ZHIQIANG ET AL: "Determination of gel time and gel point of epoxy-amine thermosets by in-situ near infrared spectroscopy", POLYMER TESTING, ELSEVIER, AMSTERDAM, NL, vol. 72, 2 November 2018 (2018-11-02), pages 416 - 422, XP085542806, ISSN: 0142-9418, DOI: 10.1016/J.POLYMERTESTING.2018.11.001
- SOLVAY COMPOSITE MATERIALS: "TECHNICAL DATA SHEET FM 309-1 FILM ADHESIVE", 10 October 2017 (2017-10-10), XP055708892, Retrieved from the Internet <URL:https://www.solvay.com/en/product/fm-309-1> [retrieved on 20200625]

## Description

### Domaine technique de l'invention

La présente invention concerne un **procédé de fabrication d'une** aube en matériau composite pour une **turbomachine d'aéronef.**

### Arrière-plan technique

**L'état de la technique comprend notamment les documents** FR-A1-2 956 057, FR-A1-3 029 134 et FR-A1-3 051 386. US-A1-2011/194941 divulgue un procédé selon le préambule de la revendication 1.

**L'utilisation de matériaux composites est avantageuse dans l'industrie** aéronautique notamment car ces matériaux ont des performances mécaniques intéressantes pour des masses relativement faibles.

**Un procédé de fabrication d'une pièce composite pour l'industrie aéronautique, qui est bien connu de l'homme du métier, est le procédé de moulage RTM** dont les **initiales font référence à l'acronyme anglo**-saxon de *Resin Transfer Molding.*

**Il s'agit** d'un procédé de réalisation d'une pièce en matériau composite à base de fibres imprégnées de résine. Un tel procédé est par exemple utilisé pour fabriquer une aube de soufflante et comporte plusieurs étapes successives.

On commence par réaliser le tissage de fibres pour obtenir une ébauche de préforme en trois dimensions, puis on découpe l'ébauche pour obtenir une **préforme présentant sensiblement la forme de l'aube à obtenir. Cette préforme** est alors disposée dans un moule d'injection, qui est refermé. Puis on injecte de la résine à l'état liquide en maintenant une pression sur la résine injectée **pendant que l'on** effectue la polymérisation de la pièce par chauffage.

Les résines utilisées sont des résines très fluides qui sont à même de bien pénétrer les fibres de la préforme, même lorsqu'elles sont injectées sous une pression réduite. Pendant la polymérisation, sous l'effet de la chaleur, la résine injectée passe successivement de l'état liquide à l'état gélifié et enfin à l'état solide.

**Pour la fabrication** d'une aube, par exemple de soufflante de turbomachine, une préforme est réalisée par tissage puis est imprégnée avec la résine afin de former une pale. Cette pale comporte un intrados et un extrados qui **s'étendent depuis un bord d'attaque jusqu'à un bord de** fuite de la pale.

Le matériau composite de la pale est relativement fragile, et en particulier sensible aux chocs, **et il est connu de le protéger au moyen d'un bouclier** métallique qui est rapporté et fixé **sur le bord d'attaque de la pale.**

Le bouclier peut être fixé à la pale de deux façons. Une première façon consiste à coller le bouclier sur la pale, après polymérisation de la résine. La colle se présente alors sous forme de pâte.

Une autre façon consiste à fixer le bouclier par co-moulage avec la préforme fibreuse. La préforme est disposée dans le moule et le bouclier est positionné sur le **bord de la préforme destiné à former le bord d'attaque de la pale.** La résine injectée imprègne la préforme et vient au contact du bouclier pour assurer sa solidarisation à la pale après polymérisation et durcissement.

La présente invention concerne un perfectionnement à cette seconde technologie dans laquelle le bouclier et la préforme subissent un co-moulage. La Demanderesse a cherché à optimiser la fixation **d'un bouclier en combinant** les deux technologies existantes et donc en utilisant un adhésif en plus du co-**moulage du bouclier avec la pale. L'adhésif est intercalé entre le bouclier et le bord d'attaque de la pale.**

**Dans un tel cas, la résine et l'adhésif** sont polymérisables. **L'adhésif** possède des propriétés rhéologiques différentes de celles de la résine. **L'adhésif** commence en général à réticuler à une température plus faible que la résine. Or cette température est atteinte lors de la montée en température du moule qui doit être chauffée à une température importante à laquelle la résine est injectée. Un adhésif dont la polymérisation est trop avancée au moment de **l'injection de la résine ne permet pas d'aboutir à une** co-liaison efficace entre résine et adhésif et diminue la tenue mécanique du bouclier sur la pale.

**L'invention** apporte une solution simple, efficace et économique pour assurer un positionnement correct et une tenue mécanique optimale du bouclier sur **l'aube.**

### Résumé de l'invention

**L'invention propose un procédé de fabrication d'une aube en matériau** composite pour une turbomachine, selon la revendication 1.

**L'invention propose ainsi d'assurer la fixation du bouclier sur la pale par co-**moulage et par un film adhésif. Le film adhésif est intercalé entre le bouclier et le bord de la préforme et est destiné à améliorer et maintenir la position du bouclier sur le bord de la préforme, et pour améliorer également la tenue et la **résistance à l'arrachement du bouclier** vis-à-vis de la pale. On comprend donc **que, lors de l'injection de résine dans le moule de fabrication de la pale, cette** résine var imprégner la préforme et va également venir au contact du film voire également du bouclier, assurant ainsi une fixation optimale du bouclier sur **l'aube.**

**L'invention propose en outre un cycle d'injection** de la résine adapté à la présence de **l'adhésif. L'objectif est d'injecter la résine** pendant un intervalle **temps pendant laquelle la viscosité de l'adhésif permet d'obtenir une** co-liaison satisfaisante. La résine est ainsi injectée **avant que l'adhésif ne soit trop** visqueux, ce qui empêcherait une bonne co-liaison entre les produits. Ce but est atteint en injectant la résine pendant un intervalle de temps au cours duquel **l'adhésif atteint un point de gel.**

**Un gel est formé de deux milieux dispersés l'un dans l'autre** : le premier milieu est dit « solide » ou « gel » et est constitué de longues molécules connectées entre elles par des points de réticulation, afin de former un réseau tridimensionnel (3D). Le second, au contraire, est un milieu liquide appelé « solvant » ou « sol » et est constitué de molécules indépendantes.

On appelle transition sol-**gel le changement d'état d'un système qui passe d'une phase unique, le** *sol,* à une biphase *sol-gel.* **Généralement, l'état du processus de gélification est caractérisé par son degré d'avancement** *p*, où *p* varie entre zéro et un entre le début et la fin du processus de polymérisation. Au point de gélification ou « point de gel », **la valeur du degré d'avancement** est *p_{c}*. Le « point de gel » **correspond à l'instant de changement abrupt de la** viscosité du milieu. Ainsi, pour 0 < *p < p_{c},* le bain de réaction est un liquide dont la viscosité η croît jusqu'à *p_{c}.* **Pour** 1 ≥ *p* > *p_{c},* **c'est** un corps élastique dont le module de cisaillement **µ** croît. Au point *p_{c},* le gel est formé. Toutefois, la polymérisation se poursuit et la viscosité augmente. Dans le cadre de la **présente invention, c'est la notion de point de gel qui importe le plus ainsi que le fait qu'on ne puisse plus injecter, ni compacter une fois passée la gélification** (état solide). Le point de gel est le passage de plusieurs macromolécules 3D à une seule macromolécule 3D, la présence de solvant pouvant ne pas avoir **d'impact sur la viscosité** (molécules indépendantes du réseau 3D).

La présente invention **propose ainsi d'adapter le moment et la durée d'injection de la résine en fonction de l'état d'avancement de la polymérisation de l'adhésif et en particulier de la variation de sa viscosité. L'injection de la résine pendant un laps de temps comportant le moment d'atteinte du point de gel de l'adhésif permet d'assurer une bonne co-liaison entre la résine et l'adhésif** notamment.

Le procédé **selon l'invention peut comprendre une ou plusieurs des** caractéristiques énoncées dans les revendications 2 à 6, prises isolément les unes des autres ou en combinaison les unes avec les autres.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 est une vue schématique en **perspective d'une aube composite de turbomachine d'aéronef,**
**[****Fig.2****] la** **figure 2** **est un schéma bloc montrant des étapes d'un procédé selon l'invention de fabrication d'une aube telle que celle représentée à la** **figure 1****,** et
[Fig.3] la figure 3 est **une vue schématique en perspective d'un moule dans** lequel sont destinés à être disposés une préforme et un bouclier, et dans lequel est destinée à être injectée une résine.

### Description détaillée de l'invention

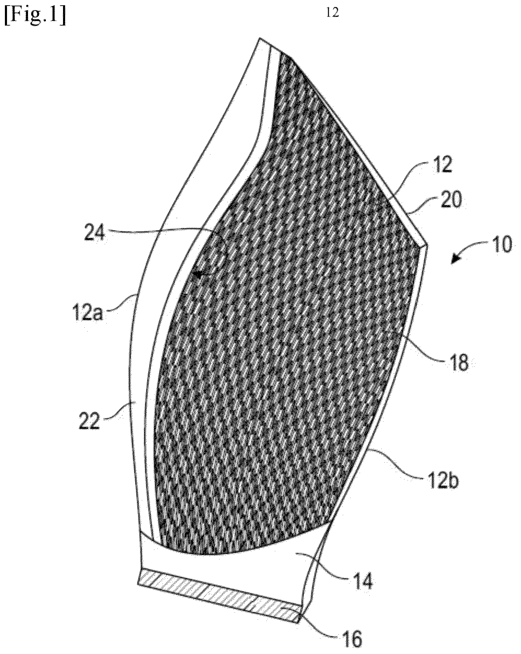

On **se réfère d'abord** à la figure 1 qui illustre une aube 10 en matériau composite pour une turbomachine, cette aube 10 étant par exemple une aube de soufflante.

**L'aube 10 comprend une pale 12 reliée par une** échasse 14 à un pied 16 qui **a par exemple une forme en queue d'aronde et est conformé pour être engagé dans une alvéole de forme complémentaire d'un disque de rotor, afin de retenir l'aube** sur **ce disque.**

**La pale 12 comprend un bord d'attaque 12a et un** bord de fuite 12b des gaz **qui s'écoulent dans la turbomachine. La pale 12 a un profil aérodynamique incurvé voire vrillé et comprend un intrados 18 et un extrados 20 s'étendant entre les bords d'attaque 12a et de fuite 12b.**

**La pale 12 est réalisée à partir d'une préforme fibreuse obtenue par tissage** en trois dimensions de fibres, par exemple en carbone.

**Le bord d'attaque 12a de la pale est renforcé et protégé par un bouclier métallique 22 qui est fixé sur ce bord d'attaque** 12a. Le bouclier 22 est par exemple en alliage à base de nickel et cobalt.

**Dans la présente invention, cette fixation est réalisée d'une part par co-moulage de la préforme avec le bouclier 22, et d'autre part** par collage du bouclier 22 **au moyen d'au moins** un adhésif 24, de préférence sous forme de film.

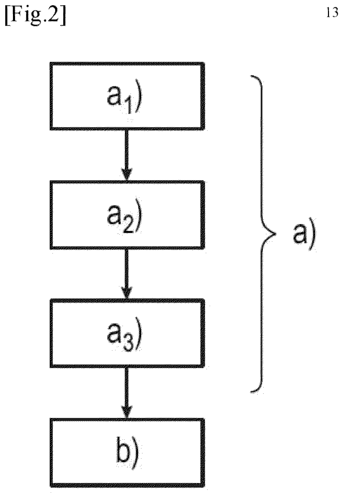

**La** **figure 2** **est un organigramme qui illustre des étapes d'un procédé de fabrication d'une aube composite** 10 telle que celle représentée à la figure 1. Le procédé peut comprendre plusieurs étapes dont certaines sont facultatives. La première étape a) du procédé comprend plusieurs sous-étapes ou opérations. **Lors d'une première** opération a1) évoquée dans ce qui précède, une préforme fibreuse est réalisée par tissage de fibres. La préforme obtenue **est brute et peut subir des opérations telles qu'un**e découpe ou une compression par exemple.

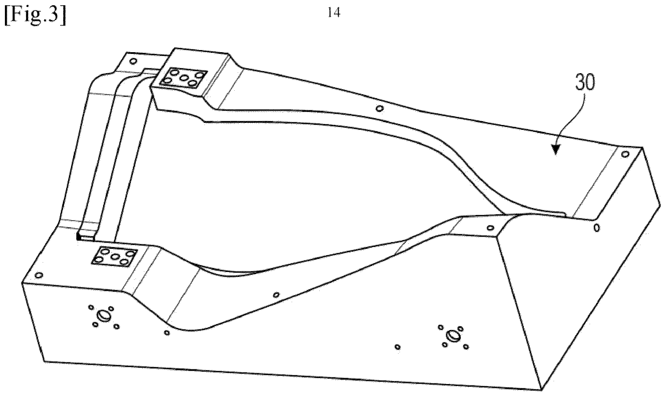

**Lors d'une** autre opération a2) du procédé, un ou plusieurs films adhésifs 24 sont préparés. Ce film adhésif 24 est destiné à être intercalé entre le bouclier 22 et la préforme, avant injection de la résine dans un moule 30 de fabrication **de l'aube,** qui est représenté à la figure 3.

Ce film adhésif 24 est par exemple un film **double face, c'est**-à-dire un film collant sur ses deux faces. Ce film est ainsi revêtu ou imbibé sur ses deux faces **d'une colle par exemple du type** époxy. **Il s'agit par exemple de l'adhésif** commercialisé par la société Solvay sous la référence FM^{®} 309-1.

Ce film adhésif 24 a par exemple une épaisseur comprise entre 0,1mm et 0,2mm. Ce film 24 **peut se présenter sous forme d'une bande. Il peut ainsi** avoir une forme allongée dont les dimensions sont fonction de celles du bouclier 22.

Le bouclier 22 a en général une forme de dièdre et définit une rainure à section en V dans lequel est inséré un bord de la préforme.

Le film adhésif 24 est de préférence collé sur le bouclier 22, **à l'intérieur de la** rainure.

Une autre opération (a3)) du procédé consiste alors à positionner la préforme équipée du film 24 et du bouclier 22 dans le moule 30 (figure 3) qui est ensuite fermé par exemple avec un contre-moule.

Les opérations a1) à a3) successives représentent une première étape a) du procédé de fabrication.

**Lors d'une** seconde étape b) du procédé, de la résine est injectée dans le moule 30 et est destinée à imprégner la préforme et à venir au contact du film 24 et du bouclier 22. Après polymérisation et durcissement de la résine, le bouclier 22 est solidarisé à la pale **par l'intermédiaire** du film adhésif 24 et de la résine.

**L'aube** 10 ainsi obtenue, après polymérisation de la résine, est avantageuse dans la mesure où son bouclier 22 est parfaitement positionné et maintenu sur la pale 12.

La résine est injectée à un temps T0 et subit alors une baisse de sa viscosité. La viscosité de la résine augmente ensuite du fait de la polymérisation et atteint un point de gel G1 à T1. La résine est par exemple injectée à une **pression comprise entre 5 et 15 bars, et pendant une durée de l'ordre de 120** minutes.

La température du moule 30 est régulée en fonction de la résine de façon à optimiser sa polymérisation. La température augmente progressivement **depuis un temps T2 jusqu'à atteindre un palier à T3 à une température, ici** supérieure ou égale à 160°C, qui correspond à la température de **polymérisation de la résine. Ce palier est maintenu jusqu'à T4 puis la** température est augmentée à partir de T4 jusqu'**à T5 jusqu'à un nouveau palier** à une température supérieure ou égale à 180°C.

**T3 intervient plus tôt que T0, c'est**-à-dire que le palier à 160°C est atteint avant **l'injection de la résine dans le moule. Par ailleurs, T4 et T5 interviennent avant** T1. Le point de gel G1 de la résine a donc lieu lors du second palier de température.

**La viscosité de l'adhésif diminue dès T2, c'est**-à-dire dès le début du chauffage du moule. La viscosité augmente ensuite à partir de T6 et ne cesse **d'augmenter en passant par un point** de gel G2 à T7. T7 est ici compris entre T3 et T4. La vitrification **V1 de l'adhésif** est atteinte à T8. T8 est ici postérieur à T5 et antérieur à T1.

**Selon l'invention, la résine est injectée dans le moule dans un intervalle de** temps ΔT autour du point de gel G2 de **l'adhésif. On comprend ainsi que la** résine est avantageusement injectée dans le moule pendant ce laps de temps **pendant lequel la viscosité de l'adhésif n'est pas trop importante. On assure** ainsi une co-**liaison optimale entre l'adhésif et la résine.**

## Revendications

1. **Procédé de fabrication d'une aube** (10) en matériau composite pour une **turbomachine, en particulier d'aéronef,** cette aube comportant une pale (12) comportant un intrados (14) et un extrados (16) **qui s'étendent depuis un bord d'attaque** (12a) **jusqu'à un bord de fuite** (12b) **de la pale, l'aube comportant en** outre un bouclier métallique (22) **s'étendant** le **long du bord d'attaque de** la pale, le procédé comprenant les étapes consistant à :
a) disposer une préforme réalisée par tissage de fibres en trois dimensions dans un moule (30), le bouclier étant positionné sur un bord de la préforme **destiné à former le bord d'attaque de la pale,** et un adhésif (24) polymérisable étant intercalé entre le bouclier et le bord de la préforme,
**b) injecter de la résine polymérisable dans le moule afin qu'elle imprègne la** préforme de façon à former la pale après solidification,
**caractérisé en ce que la résine est injectée à l'étape b)** pendant un intervalle de temps (ΔT) au cours duquel ledit adhésif atteint un point de gel, de sorte **que l'injection de résine commence avant le point de gel,** le point de gel étant défini comme le passage de plusieurs macromolécules 3D à une seule macromolécule 3D.

2. Procédé selon la revendication 1, dans lequel l'adhésif (24) se présente sous forme de film adhésif, en particulier double face.

3. **Procédé selon l'une des revendications précédentes, dans lequel** la température du moule est régulée de façon à ce **qu'elle soit maintenue constante pendant l'intervalle de temps.**

4. Procédé selon la revendication précédente, dans lequel la température **du moule est maintenue à au moins 160°C pendant l'intervalle de temps.**

5. **Procédé selon l'une des revendications précédentes,** dans lequel la résine est une résine époxy.

6. **Procédé selon l'une des revendications précédentes, dans lequel l'adhésif est un adhésif époxy.**

## Patentansprüche

1. Verfahren zur Herstellung einer Schaufel (10) aus Verbundmaterial für ein Turbotriebwerk, insbesondere eines Luftfahrzeugs, wobei diese Schaufel ein Schaufelblatt (12) umfasst, das eine innere windzugewandte Fläche (14) und eine äußere windabgewandte Fläche (16) umfasst, die sich ausgehend von einer Angriffskante (12a) bis zu einer Abströmkante (12b) des Schaufelblatts erstrecken, wobei die Schaufel weiter ein metallisches Schutzschild (22) umfasst, das sich entlang der Angriffskante des Schaufelblatts erstreckt, wobei das Verfahren die Schritte umfasst, die aus Folgendem bestehen:
a) Anordnen einer Vorform, die durch Verweben von Fasern in drei Dimensionen gefertigt ist, in einer Form (30), wobei das Schutzschild auf einer Kante der Vorform positioniert ist, die dazu vorgesehen ist, die Angriffskante des Schaufelblatts zu bilden, und wobei ein polymerisierbares Haftmittel (24) zwischen dem Schutzschild und der Kante der Vorform eingefügt ist,
b) Einspritzen des polymerisierbaren Harzes in die Form, damit es die Vorform so imprägniert, dass das Schaufelblatt nach Verfestigung gebildet wird,
**dadurch gekennzeichnet, dass** das Harz im Schritt b) während einer Zeitdauer (ΔT) eingespritzt wird, während der das Haftmittel einen Gelpunkt erreicht, sodass die Einspritzung des Harzes vor dem Gelpunkt beginnt, wobei der Gelpunkt als der Übergang von mehreren 3D-Makromolekülen in ein einziges 3D-Makromolekül definiert ist.

2. Verfahren nach Anspruch 1, wobei das Haftmittel (24) in Form eines, insbesondere doppelseitigen, Haftfilms vorliegt.

3. Verfahren nach einem der vorstehenden Ansprüche, wobei die Temperatur der Form derart reguliert wird, dass sie während der Zeitdauer konstant gehalten wird.

4. Verfahren nach dem vorstehenden Anspruch, wobei die Temperatur der Form während der Zeitdauer auf mindestens 160°C gehalten wird.

5. Verfahren nach einem der vorstehenden Ansprüche, wobei das Harz ein Epoxidharz ist.

6. Verfahren nach einem der vorstehenden Ansprüche, wobei das Haftmittel ein Epoxidhaftmittel ist.

## Claims

1. A method for manufacturing a blade (10) made of composite material for a turbomachine, in particular of an aircraft, said blade comprising a vane (12) having a pressure side (14) and a suction side (16) which extend from a leading edge (12a) to a trailing edge (12b) of the vane, the blade further comprising a metal shield (22) extending along the leading edge of the vane, the method comprising the steps of:
a) disposing a preform made by three-dimensionally weaving fibers in a mould (30), the shield being positioned on an edge of the preform to form the leading edge of the vane, and a polymerizable adhesive (24) being interposed between the shield and the edge of the preform,
b) injecting polymerizable resin into the mould to impregnate the preform to form the vane after solidification,
**characterized in that** the resin is injected during a time interval (ΔT) during which said adhesive reaches a gel point, such that injection begins before the gel point, the gel point being defined as the passage from several 3D macromolecules to a single 3D macromolecule.

2. The method according to claim 1, wherein the adhesive (24) is in the form of an adhesive film.

3. The method according to one of the preceding claims, wherein the temperature of the mould is regulated so that it is kept constant during the time interval.

4. The method according to the preceding claim, wherein the temperature of the mould is maintained at a temperature of at least 160°C during the time interval.

5. The method according to one of the preceding claims, wherein the resin is an epoxy resin.

6. The method according to one of the preceding claims, wherein the adhesive is an epoxy adhesive.
